# EUROPÄISCHE PATENTSCHRIFT

(11) **EP 2 959 388 B1**
(45) Veröffentlichungstag und Bekanntmachung des Hinweises auf die Patenterteilung: **19.06.2019**
(21) Anmeldenummer: 14701905.3
(22) Anmeldetag: 15.01.2014
(51) Int. Cl.: G06F 11/24, G11C 5/14

(54) **FELDTEST BEI KONTAKTLOSKARTEN**
FIELD TEST IN CONTACTLESS CARDS
ESSAI DE TERRAIN SUR DES CARTES SANS CONTACT

(30) Priorität: 19.02.2013 DE 102013002888
(43) Veröffentlichungstag der Anmeldung: 30.12.2015
(73) Patentinhaber: Giesecke+Devrient Mobile Security GmbH, 81677 München (DE)
(72) Erfinder: BALDISCHWEILER, Michael, 81825 München (DE); ULBRICHT, Thorsten, 81369 München (DE)
(86) Internationale Anmeldenummer: PCT/EP2014/000080
(87) Internationale Veröffentlichungsnummer: WO 2014/127875

(56) Entgegenhaltungen:
- US-A- 5 646 509
- US-A1- 2009 066 483

## Beschreibung

Die Erfindung beschreibt ein Verfahren und eine Vorrichtung zum Testen, ob ein Prozessor von einer elektrischen Quelle ausreichend elektrische Leistung zur Verfügung gestellt bekommt, damit der Prozessor ein Programm starten und ausführen kann, ohne daß der Prozessor beim Starten und/ oder Ausführen des Programms unterbrochen wird, weil der Prozessor während dem Start und/oder der Ausführung des Programms mehr Leistung der Quelle entnimmt, als diese zur Verfügung stellt.

Controller, welche einen Prozessor, flüchtigen und nicht flüchtigen Speicher und entsprechende Schnittstellen für eine chipexterne Kommunikation umfassen, von kontaktlosen Datenträgern, welche eine Antennenspule umfassen, sind in der Lage mit Hilfe von Sensoren, welche beispielsweise im Controller integriert sind, eine magnetische Feldstärke zu erfassen. Entsprechende Controller werden beispielsweise von den Herstellern IFX, NXP oder ST angeboten. Neben den Sensoren zur Erfassung der magnetischen Feldstärke können die Controller auch Sensoren umfassen, welche beispielsweise eine elektrische Spannung oder eine elektrische Feldstärke erfassen. Die Sensoren erzeugen ein Signal, welches im Controller ein Flag verändert um einen entsprechenden Zustand anzuzeigen. Beispielsweise werden die Sensoren vom Controller abgefragt, um festzustellen, ob bereits die für einen Start eines Betriebssystems notwendigen Voraussetzungen, z.B. eine notwendige magnetische Feldstärke, erfüllt sind.

Problematisch dabei ist, dass zwar oft die notwendigen Voraussetzungen, z.B. eine notwendige magnetische Feldstärke, erfüllt sind, um beispielsweise den Controller über die Antennenspule mit der zum Betrieb notwendigen Energie zu versorgen, aber die im magnetischen Feld vorhandene Energie nicht bis zum Controller übertragen werden kann, weil die Ausgangsimpedanz der Antennenspule nicht an die Eingangsimpedanz des Controllers angepasst ist. Dies führt dazu, dass zwar das Betriebssystem gestartet wird, weil der Controller die Information über ein Flag erhält, dass z.B. ein ausreichend starkes magnetisches Feld vorhanden ist, aber nach dem Start der Controller mehr Leistung aufnimmt, als ihm die Antennenspule zur Verfügung stellt, und somit die Spannung des Controllers zusammenbricht. Demzufolge wird der Start des Betriebssystems mitten im Ablauf unterbrochen, so dass der Controller wieder zurückgesetzt wird. Besonders dann, wenn ein Cryptocontroller oder eine Programmiersequenz für den EEPROM- oder FLASH-Speicher gestartet wurden, wird vom Controller vergleichsweise viel Strom aufgenommen, so dass der Ablauf des Starts des Betriebssystems häufig während dieser Zeit unterbrochen wird. Besonders problematisch ist, dass eine Unterbrechung insbesondere bei Schlüsselberechnungen zu Sicherheitsproblemen und/ oder zu unnötigen Rollbackabläufen im EEPROM-/FLASH-Speicher führt.

US 5,646,509 offenbart ein Batterietestsystem, welches zum Testen sowohl einer oberen als auch einer unteren Entladekapazität einer Sicherungsbatterie dient, um sicher zu gehen, dass die Batterie sowohl einen hohen Entladestrom in kurzer Zeit als auch einen niedrigen Entladestrom über eine lange Zeit zur Verfügung zu stellen. Das Batterietestsystem kann in einem elektronischen System eingesetzt werden, wobei das System bei einer Unterbrechung der elektrischen Energieversorgung, von einem Betriebsmodus in einen Energiesparmodus umschaltet. Zum Testen des hohen Entladestroms der Sicherungsbatterie wird ein sogenanntes Sicherheitsnetz verwendet, wobei eine Spannung der elektrischen Energieversorgung des elektronischen Systems auf eine zum Testen reduzierte Ausgangsspannung umgeschaltet wird.

US 2009/0066483 A1 beschreibt eine passive kontaktlose integrierte Schaltung, die einen elektrisch programmierbaren nicht flüchtigen Speicher und eine Ladeschaltung, um eine hohe Spannung zur Verfügung zu stellen, die zum Schreiben in den Speicher notwendig ist, enthält. Die integrierte Schaltung enthält einen flüchtigen Speicher um ein Indikator-Flag abzuspeichern, welches anzeigt, wenn die hohe Spannung einen kritischen Wert zum ersten Mal nach Aktivierung der Treiberschaltung erreicht.

Ausgehend vom Stand der Technik ist es Aufgabe der Erfindung eine Lösung für das beschriebene Problem zu finden. Die Erfindung soll insbesondere eine Lösung zur Verfügung stellen, welche verhindert, dass der Start und die Ausführung eines Programmes unterbrochen wird, weil die notwendige elektrische Energie am Prozessor nicht zur Verfügung steht, obwohl durch mindestens einen Sensor angezeigt wird, dass die notwendige Energie zur Verfügung steht.

Die Erfindung ist durch die unabhängigen Ansprüche 1 und 11 definiert.

Die Aufgabe der Erfindung wird durch den unabhängigen Anspruch gelöst. Vorteilhafte Ausführungen sind in den abhängigen Ansprüchen beschrieben.

Zur Lösung der Aufgabe offenbart die Erfindung ein Verfahren zur Bestimmung der Belastbarkeit einer elektrischen Quelle durch einen Prozessor, so dass ein Start und/ oder eine Ausführung eines Programms durch den Prozessor ausgeführt werden, ohne dass der Start und/ oder die Ausführung des Programms unterbrochen werden, wenn der Prozessor während dem Start und/ oder während der Ausführung des Programms der Quelle mehr elektrische Leistung entnimmt als die Quelle zur Verfügung stellt, welches sich dadurch auszeichnet, dass vor dem Start und der Ausführung des Programms der Prozessor ein Hilfsprogramm startet und ausführt, wobei das Hilfsprogramm mindestens dieselbe Leistungsaufnahme des Prozessors bei Start und Ausführung bewirkt, wie wenn der Prozessor das Programm startet und ausführt, um festzustellen, ob die von der Quelle zur Verfügung gestellte Leistung ausreicht für den Start und die Ausführung des Programms, um bei mindestens ausreichender Leistung im Anschluss an die Ausführung des Hilfsprogramms das Programm vom Prozessor zu starten und auszuführen.

Ein vorteilhaftes Ausführungsbeispiel der Erfindung ist, dass das Hilfsprogramm die Leistungsaufnahme des Prozessors erhöht, indem das Hilfsprogramm eine Taktfrequenz des Prozessors erhöht. Die Taktfrequenz kann dabei in beliebig vielen Schritten erhöht werden, wobei eine Anzahl der Schritte vorgegeben werden kann. Ferner können auch die Abstände zwischen den Schritten vorgegeben werden, z.B. können die Schritte gleiche oder unterschiedliche Abstände haben.

Ein weiteres vorteilhaftes Ausführungsbeispiel der Erfindung ist, dass die Taktfrequenz solange erhöht wird bis eine maximale Taktfrequenz erreicht wird, bei der ein Start und eine Ausführung des Hilfsprogramms durch den Prozessor möglich ist, ohne dass der Prozessor der Quelle mehr Energie entnimmt als die Quelle zur Verfügung stellt. Eine maximale Taktfrequenz ist die letzte Taktfrequenz vor einer weiteren Erhöhung der Taktfrequenz durch das Hilfsprogramm, bei welcher letzten Taktfrequenz ein Start und eine Ausführung des Hilfsprogramms durch den Prozessor möglich ist, ohne dass der Prozessor der Quelle mehr Leistung entnimmt als die Quelle zur Verfügung stellt, wobei nach der weiteren Erhöhung der Taktfrequenz der Prozessor bei Start und Ausführung des Hilfsprogramms der Quelle mehr Energie entnimmt als die Quelle zur Verfügung stellt und folglich ein Start und eine Ausführung des Hilfsprogramms nicht möglich ist, weil beispielsweise die Versorgungsspannung des Prozessors einbricht. Allgemein gilt, dass das Hilfsprogramm mindestens einmal bei jeder Taktfrequenz gestartet und vollständig ausgeführt wird.

Ein weiteres vorteilhaftes Ausführungsbeispiel der Erfindung ist, dass das Hilfsprogramm wieder bei einer minimalen Taktfrequenz beginnt, wenn der Start oder die Ausführung des Hilfsprogramms unterbrochen wurde, da der Prozessor mehr Leistung aus der Quelle entnommen hat, als die Quelle zur Verfügung gestellt hat. Wie vorher beschrieben, wird nach dem Beginn die Taktfrequenz wieder erhöht bis die maximale Taktfrequenz ermittelt wird.

Ein weiteres vorteilhaftes Ausführungsbeispiel der Erfindung ist, dass das Hilfsprogramm beendet wird, wenn es eine für den Prozessor höchst mögliche Taktfrequenz erreicht hat, bei der ein Start und eine Ausführung des Hilfsprogramms durch den Prozessor möglich ist, ohne dass der Prozessor der Quelle mehr Leistung entnimmt als die Quelle zur Verfügung stellt. Die für den Prozessor höchst mögliche Taktfrequenz ist die höchste Taktfrequenz, bei welcher der Prozessor betrieben werden kann. Die höchst mögliche Taktfrequenz ist üblicherweise in einem Datenblatt des Prozessors aufgeführt, welches von einem Hersteller des Prozessors erhältlich ist.

Ein weiteres vorteilhaftes Ausführungsbeispiel der Erfindung ist, dass die höchst mögliche Taktfrequenz größer oder gleich der maximalen Taktfrequenz ist.

Ein weiteres vorteilhaftes Ausführungsbeispiel der Erfindung ist, dass die maximale Taktfrequenz für den folgenden Betrieb des Prozessors gespeichert wird. Dies hat den Vorteil, dass eine früher bestimmte maximale Taktfrequenz später wieder verwendet werden kann. Dies spart beispielsweise die Zeit, welche notwendig ist um die maximale Taktfrequenz mit Hilfe des Hilfsprogramms zu ermitteln.

Ein weiteres vorteilhaftes Ausführungsbeispiel der Erfindung ist, dass das Hilfsprogramm nur einmal bei der ersten Inbetriebnahme des Prozessors oder bei mindestens einer der ersten Inbetriebnahme folgenden Inbetriebnahme ausgeführt wird. Falls das Hilfsprogramm nur bei der ersten Inbetriebnahme des Prozessors ausgeführt wird, dann kann die ermittelte maximale Taktfrequenz für eine spätere Verwendung gespeichert werden, wie vorher beschrieben. Dies bietet sich an, wenn z.B. ein Prozessor immer an ein und derselben Quelle betrieben wird. Falls jedoch Veränderungen durchgeführt werden, dass z.B. der Prozessor mit unterschiedlichen Quellen verbunden wird oder wenn sich beispielsweis die Quelle selbst ändert, dann besteht die Möglichkeit, dass das Hilfsprogramm mehrmals, z.B. bei jeder Inbetriebnahme des Prozessors ausgeführt wird.

Ein weiteres vorteilhaftes Ausführungsbeispiel der Erfindung ist, dass für einen Betrieb des Prozessors nach Bestimmung der maximalen Taktfrequenz eine tiefere Taktfrequenz als die maximale Taktfrequenz verwendet wird, um einen sicheren Start und eine sichere Ausführung des Programms zu gewährleisten. Dies hat den Vorteil, dass dann immer noch ein Anteil der von der Quelle zur Verfügung gestellten Energie als Reserve zur Verfügung steht, z.B. für unvorhergesehene Belastungen des Prozessors durch besonders rechenintensive Aufgaben oder durch weitere angeschlossene elektronische Baugruppen, z.B. eine Tastatur oder eine Anzeige.

Ein weiteres vorteilhaftes Ausführungsbeispiel der Erfindung ist, dass die Taktfrequenz mittels einer Phasenregelschleife oder eines Taktteilers oder eines RC-Schwingkreises mit folgenden Taktteiler erzeugt wird. Ferner sind alle anderen Schaltungen möglich, welche zur Erzeugung einer einstellbaren Taktfrequenz geeignet sind.

Ein weiteres vorteilhaftes Ausführungsbeispiel der Erfindung ist, dass das Hilfsprogramm bei Start und Ausführung durch den Prozessor mindestens dieselbe Leistungsaufnahme des Prozessors bewirkt wie wenn das Programm durch den Prozessor gestartet und ausgeführt wird, indem das Hilfsprogramm ein definierter Rechenalgorithmus in Form von Additionen und/ oder Subtraktionen und/ oder Multiplikationen und/ oder Divisionen ist, welcher vom Prozessor ausgeführt wird.

Ein weiteres vorteilhaftes Ausführungsbeispiel der Erfindung ist, dass das Hilfsprogramm nur dann vom Prozessor gestartet wird, wenn mindestens ein Sensor, welcher mit dem Prozessor elektrisch leitend verbunden ist, dem Prozessor signalisiert, dass ein elektromagnetisches Feld genügend Leistung zum Start und zur Ausführung des Programms zur Verfügung stellt. Das elektromagnetische Feld umgibt dazu vorteilhafterweise den Prozessor. Das elektromagnetische Feld wird beispielsweise von einem Lesegerät für Chipkarten erzeugt.

Ein weiteres vorteilhaftes Ausführungsbeispiel der Erfindung ist, dass der mindestens eine Sensor eine elektrische Spannung und/ oder eine magnetische Feldstärke und/ oder eine elektrische Feldstärke erfasst.

Ein weiteres vorteilhaftes Ausführungsbeispiel der Erfindung ist, dass das Hilfsprogramm die Leistungsaufnahme des Prozessors bei Start und Ausführung bewirkt, wie wenn der Prozessor das Programm startet und ausführt, und zusätzlich die Energieaufnahme bei Start und Ausführung mindestens einer weiteren elektronischen Baugruppe bewirkt, um festzustellen, ob die von der Quelle zur Verfügung gestellte Energie ausreicht für den Start und die Ausführung des Programms und der mindestens einen weiteren elektronischen Baugruppe, um bei mindestens ausreichender Energie im Anschluss an die Ausführung des Hilfsprogramms das Programm vom Prozessor zu starten und auszuführen und die mindestens eine weitere elektronische Baugruppe zu starten und zu betreiben.

Ein weiteres vorteilhaftes Ausführungsbeispiel der Erfindung ist, dass als weitere elektronische Baugruppe mindestens eine elektronische Anzeige und/ oder eine Tastatur verwendet werden. Ferner sind alle anderen elektronischen Baugruppen möglich, welche sich beispielsweise für eine Nutzung in einem tragbaren Datenträger, wie z.B. einer Chipkarte, eignen.

Ein weiteres vorteilhaftes Ausführungsbeispiel der Erfindung ist, dass als Programm ein Betriebssystem eingesetzt wird. Neben einem Betriebssystem ist jedes andere geeignete Programm möglich.

Ein weiteres vorteilhaftes Ausführungsbeispiel der Erfindung ist, dass als elektrische Quelle eine Antennenspule verwendet wird, welche mit dem Prozessor elektrisch leitend verbunden ist. Darüber hinaus ist die vorliegende Erfindung ganz allgemein für alle Quellen geeignet, welche zur Versorgung eines Prozessors mit elektrischer Energie geeignet sind.

Ein weiteres vorteilhaftes Ausführungsbeispiel der Erfindung ist, dass die Ausgangsimpedanz der Quelle und die Eingangsimpedanz des Prozessors nicht aufeinander abgestimmt sind. Dies ist besonders vorteilhaft, da es mit der vorliegenden Erfindung möglich ist, einen Prozessor mit einer elektrischen Quelle, welche den Prozessor mit Energie versorgt, zu verbinden und zu betreiben ohne Rücksicht zu nehmen auf die Ausgangsimpedanz der Quelle und die Eingangsimpedanz des Prozessors.

Ein weiteres vorteilhaftes Ausführungsbeispiel der Erfindung ist, dass als Prozessor ein Controller verwendet wird.

Ein weiteres vorteilhaftes Ausführungsbeispiel der Erfindung ist, dass der Prozessor in einem tragbaren Datenträger angeordnet ist.

Ein weiteres vorteilhaftes Ausführungsbeispiel der Erfindung ist, dass der tragbare Datenträger eine Chipkarte oder ein RFID-Token oder ein NFC-Modul eines Mobiltelefons ist. Darüber hinaus ist die Erfindung in jedem anderen elektrischen Gerät verwendbar, in welchem ein Prozessor von einer elektrischen Quelle mit Energie versorgt wird, beispielsweise eine Fotokamera, Laptops, Notepads, Smartphones etc.

Ferner offenbart die Erfindung zur Lösung der Aufgabe eine Chipkarte, welche eingerichtet ist das oben beschriebene Verfahren auszuführen.

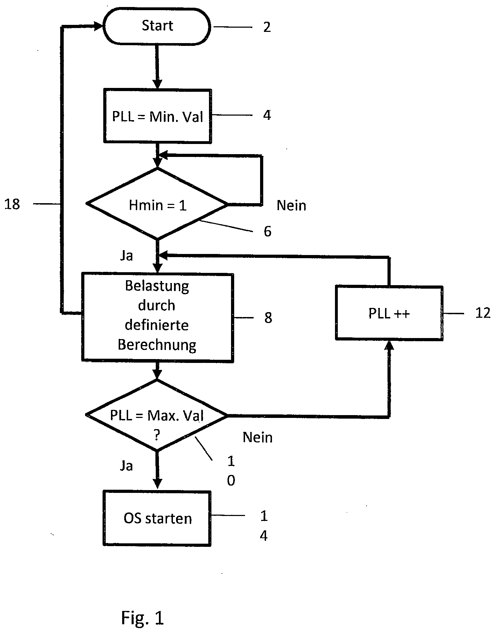

Im Folgenden wird ein Ausführungsbeispiel der Erfindung anhand der beigefügten Figur 1 detailliert beschrieben.

Figur 1 zeigt den Ablauf des erfindungsgemäßen Verfahrens. Ein Start, siehe Verfahrensschritt 2, des erfindungsgemäßen Verfahrens erfolgt, wenn aus einem einen tragbaren Datenträger, welcher einen Controller mit einer damit elektrisch leitend verbundenen Antennenspule umfasst, umgebenden beispielsweise magnetischen Feld ausreichend Energie zur Verfügung gestellt wird. Dies kann der Controller beispielsweise durch Sensoren feststellen, welche im Controller enthalten sein können oder auch von außen mit dem Controller elektrisch leitend verbunden sein können und die magnetische Feldstärke erfassen und an den Controller entsprechend signalisieren. Zur Einstellung einer Taktfrequenz verfügen Controller gemäß dem Stand der Technik über Phasenregelschleifen, sogenannte phase locked loops, abgekürzt mit PLL. Als Alternative zu einer PLL sind im Stand der Technik ein Taktteiler oder ein RC-Schwingkreis mit einem nachfolgenden Taktteiler üblich. Zu Beginn des erfindungsgemäßen Verfahrens wird die PLL auf einen minimalen Wert eingestellt, siehe Verfahrensschritt 4.

Das bedeutet, dass der Controller mit einer minimalen Taktfrequenz am Anfang des Verfahrens betrieben wird. Der Controller frägt die Sensoren ab, ob eine minimale magnetische Feldstärke des den Datenträger umgebenden magnetischen Felds vorhanden ist, siehe Verfahrensschritt 6. Falls dies nicht der Fall ist, dann wartet der Controller solange bis diese Bedingung einer minimalen magnetischen Feldstärke erfüllt ist. Andernfalls folgt im nächsten Schritt 8 des Verfahrens eine Belastung einer von der Antennenspule an den Controller zur Verfügung gestellten Leistung durch die Ausführung einer definierten Berechnung durch ein Hilfsprogramm, welches der Controller ausführt. Die definierte Berechnung führt zu einem festen Verlauf eines von dem Controller aufgenommenen Stroms. Je nach Controllertyp kann die definierte Berechnung eine Addition und/oder Multiplikation und/ oder Division von Daten, beispielsweise Bytes, sein. Bei einem anderen Controllertyp kann die definierte Berechnung eine Multiplikation und/ oder Division von Daten, z.B. Integer-Werten, sein. Allgemein gilt, dass für jeden Controllertyp eine geeignete definierte Berechnung gewählt werden kann. Im Anschluss an die definierte Berechnung wird in Verfahrensschritt 10 geprüft, ob die PLL bereits auf einen maximalen Wert zur Vorgabe der Taktfrequenz des Controllers eingestellt ist. Dieser maximale Wert zur Vorgabe der Taktfrequenz des Controllers kann beispielsweise eine höchst mögliche Taktfrequenz des Controllers sein. Falls die PLL noch nicht auf einen maximalen Wert zur Vorgabe der Taktfrequenz des Controllers eingestellt ist, dann wird die Einstellung der PLL und somit auch die Taktfrequenz in Verfahrensschritt 12 erhöht und die definierte Berechnung von Verfahrensschritt 8 wiederholt. Dieser Vorgang des Verfahrens wiederholt sich solange bis die maximale Einstellung der PLL erreicht ist. Die maximale Einstellung der PLL ist die höchst mögliche Taktfrequenz, bei der ein stabiler und unterbrechungsfreier Ablauf der definierten Berechnung und letztlich des Betriebssystems unter Berücksichtigung der zur Verfügung gestellten Leistung z.B. bereit gestellt von der Antennenspule, möglich ist. Mit steigender Taktfrequenz des Controllers nimmt bei gleicher Programmabarbeitung, d.h. der definierten Berechnung, der Stromverbrauch des Controllers linear zu. Falls während einer definierten Berechnung eine Versorgungsspannung am Controller zusammenbrechen sollte, weil der Controller mehr Leistung aufnimmt, als die Antennenspule zur Verfügung stellen kann, dann wird das Verfahren über den Verfahrensschritt 18 wieder neu gestartet. Falls die maximale Einstellung der PLL bereits erreicht wurde und es ist ein unterbrechungsfreier und stabiler Betrieb der definierten Berechnung bei der eingestellten höchsten Taktfrequenz möglich, dann wird das Betriebssystem in Verfahrensschritt 14 gestartet. Zur Sicherheit kann jetzt die Taktfrequenz reduziert werden, um genügend Leistung für einen späteren Zeitpunkt zur Verfügung zu haben, wenn weitere elektronische Baugruppen, z.B. ein Kryptocontroller, eine Ladungspumpe, etc. in Betrieb genommen werden.

Der maximale Wert zur Einstellung der PLL, in welcher ein Betrieb des Controllers stabil und unterbrechungsfrei möglich ist, kann in einer nichtflüchtigen Speicherzelle abgespeichert werden. Es ist somit möglich für jeden tragbaren Datenträger, insbesondere jeden Controller, individuell eine optimale Einstellung der PLL zu bestimmen und somit Qualitätsschwankungen von Antennenspulen entgegenzuwirken.

Wesentlich für das Verfahren ist, dass es die maximal mögliche Einstellung der PLL und letztlich der Taktfrequenz des Controllers unter Berücksichtigung der zur Verfügung gestellten Leistung bestimmt, bei der ein stabiler und unterbrechungsfreier Betrieb des Controllers möglich ist, wobei dabei die Anpassung zwischen der Ausgangsimpedanz einer Quelle, z.B. der Antennenspule, und der Eingangsimpedanz einer Senke, z.B. des Controllers berücksichtigt wird. Erst wenn diese Einstellung der PLL bzw. Taktfrequenz des Controllers bestimmt ist, wird das Betriebssystem gestartet. Somit kann es nicht mehr passieren, dass ein Controller ein Betriebssystem startet und beim Einschalten von Hardwareelementen während einer Abarbeitung des Betriebssystems ein Hardwarereset durchgeführt wird und eine möglicherweise begonnene Transaktion abgebrochen wird und somit ein sicherheitskritischer Zustand entsteht.

## Patentansprüche

1. Verfahren zur Bestimmung der Belastbarkeit einer elektrischen Quelle durch einen Prozessor, so dass ein Start und/oder eine Ausführung eines Programms durch den Prozessor ausgeführt werden, ohne dass der Start und/oder die Ausführung des Programms unterbrochen werden, wenn der Prozessor während dem Start und/ oder während der Ausführung des Programms der Quelle mehr elektrische Leistung entnimmt als die Quelle zur Verfügung stellt,
wobei als elektrische Quelle eine Antennenspule verwendet wird, welche mit dem Prozessor elektrisch leitend verbunden ist,
wobei der Prozessor und die Antennenspule in einem tragbaren Datenträger angeordnet sind,
wobei der Prozessor mit Sensoren elektrisch leitend verbunden ist, welche dem Prozessor signalisieren, ob eine minimale magnetische Feldstärke des den Datenträger umgebenden magnetischen Felds vorhanden ist,
wobei das magnetische Feld von einem Lesegerät erzeugt wird, wobei eine Ausgangsimpedanz der Antennenspule nicht an eine Eingangsimpedanz des Prozessors angepasst ist,
**dadurch gekennzeichnet, dass** vor dem Start und der Ausführung des Programms der Prozessor ein Hilfsprogramm startet (8) und ausführt, wobei das Hilfsprogramm mindestens dieselbe Energieaufnahme des Prozessors bei Start und Ausführung bewirkt, wie wenn der Prozessor das Programm startet und ausführt, um festzustellen, ob die von der Quelle zur Verfügung gestellte Leistung ausreicht für den Start und die Ausführung des Programms, um bei mindestens ausreichender Leistung im Anschluss an die Ausführung des Hilfsprogramms das Programm vom Prozessor zu starten und auszuführen (14), wobei das Hilfsprogramm die Leistungsaufnahme des Prozessors erhöht, indem das Hilfsprogramm eine Taktfrequenz des Prozessors erhöht (12), wobei die Taktfrequenz solange erhöht wird bis eine maximale Taktfrequenz erreicht wird (10), bei der ein Start und eine Ausführung des Hilfsprogramms durch den Prozessor möglich ist, ohne dass der Prozessor der Quelle mehr Leistung entnimmt als die Quelle zur Verfügung stellt.

2. Verfahren nach Anspruch 1, **dadurch gekennzeichnet, dass** das Hilfsprogramm wieder bei einer minimalen Taktfrequenz beginnt, wenn der Start oder die Ausführung des Hilfsprogramms unterbrochen wurde, da der Prozessor mehr Leistung aus der Quelle entnommen hat, als die Quelle zur Verfügung gestellt hat.

3. Verfahren nach einem der Ansprüche 1 bis 2, **dadurch gekennzeichnet, dass** das Hilfsprogramm beendet wird, wenn es eine für den Prozessor höchst mögliche Taktfrequenz erreicht hat, bei der ein Start und eine Ausführung des Hilfsprogramms durch den Prozessor möglich ist, ohne dass der Prozessor der Quelle mehr Leistung entnimmt als die Quelle zur Verfügung stellt.

4. Verfahren nach Anspruch 3, **dadurch gekennzeichnet, dass** die höchst mögliche Taktfrequenz größer oder gleich der maximalen Taktfrequenz ist.

5. Verfahren nach einem der Ansprüche 1 bis 4, **dadurch gekennzeichnet, dass** die maximale Taktfrequenz für den folgenden Betrieb des Prozessors gespeichert wird.

6. Verfahren nach einem der Ansprüche 1 bis 5, **dadurch gekennzeichnet, dass** das Hilfsprogramm nur einmal bei der ersten Inbetriebnahme des Prozessors oder bei mindestens einer der ersten Inbetriebnahme folgenden Inbetriebnahme ausgeführt wird.

7. Verfahren nach einem der Ansprüche 1 bis 6, **dadurch gekennzeichnet, dass** für einen Betrieb des Prozessors nach Bestimmung der maximalen Taktfrequenz eine tiefere Taktfrequenz als die maximale Taktfrequenz verwendet wird, um einen sicheren Start und eine sichere Ausführung des Programms zu gewährleisten.

8. Verfahren nach einem der Ansprüche 1 bis 7, **dadurch gekennzeichnet, dass** die Taktfrequenz mittels einer Phasenregelschleife oder eines Taktteilers oder eines RC-Schwingkreises mit folgenden Taktteiler erzeugt wird.

9. Verfahren nach einem der Ansprüche 1 bis 8, **dadurch gekennzeichnet, dass** das Hilfsprogramm bei Start und Ausführung durch den Prozessor mindestens dieselbe Leistungsaufnahme des Prozessors bewirkt wie wenn das Programm durch den Prozessor gestartet und ausgeführt wird, indem das Hilfsprogramm ein definierter Rechenalgorithmus in Form von Additionen und/oder Subtraktionen und/oder Multiplikationen und/oder Divisionen ist, welcher vom Prozessor ausgeführt wird.

10. Verfahren nach einem der Ansprüche 1 bis 9, **dadurch gekennzeichnet, dass** das Hilfsprogramm nur dann vom Prozessor gestartet wird, wenn mindestens ein Sensor, welcher mit dem Prozessor elektrisch leitend verbunden ist, dem Prozessor signalisiert, dass ein elektromagnetisches Feld genügend Leistung zum Start und zur Ausführung des Programms zur Verfügung stellt.

11. Chipkarte, welche eingerichtet ist das Verfahren gemäß den Ansprüchen 1 bis 10 auszuführen.

## Claims

1. A method for determining the load capacity of an electrical source by a processor, so that a start and/ or an execution of a program are executed by the processor, without the start and/ or the execution of the program being interrupted when the processor draws more electric power from the source than the source makes available during the start and/ or during the execution of the program,
wherein as an electrical source an antenna coil is employed which is electroconductively connected to the processor,
wherein the processor and the antenna coil are arranged in a portable data carrier,
wherein the processor is electroconductively connected to sensors which signal to the processor whether a minimal magnetic field strength of the magnetic field surrounding the data carrier is present,
wherein the magnetic field is generated by a reading device,
wherein an output impedance of the antenna coil is not adapted to an input impedance of the processor,
**characterized in that** before the start and the execution of the program, the processor starts (8) and executes an auxiliary program,
wherein the auxiliary program effectuates at least the same energy consumption of the processor upon starting and executing as when the processor starts and executes the program, in order to ascertain whether the power made available by the source is sufficient for the start and the execution of the program, in order to start and execute (14) the program by the processor upon at least sufficient power, subsequent to the execution of the auxiliary program,
wherein the auxiliary program increases the power consumption of the processor by the auxiliary program increasing a clock frequency of the processor (12),
wherein the clock frequency is increased until a maximum clock frequency is reached (10), upon which a start and an execution of the auxiliary program is possible by the processor without the processor drawing more power from the source than the source makes available.

2. The method according to claim 1, **characterized in that** the auxiliary program begins again upon a minimal clock frequency if the start or the execution of the auxiliary program was interrupted because the processor has drawn more power from the source than the source has made available.

3. The method according to any of claims 1 to 2, **characterized in that** the auxiliary program is ended when it has reached a highest clock frequency possible for the processor, upon which a start and an execution of the auxiliary program is possible by the processor without the processor drawing more power from the source than the source makes available.

4. The method according to claim 3, **characterized in that** the highest possible clock frequency is greater than or equal to the maximum clock frequency.

5. The method according to any of claims 1 to 4, **characterized in that** the maximum clock frequency for the following operation of the processor is stored.

6. The method according to any of claims 1 to 5, **characterized in that** the auxiliary program is executed only once upon the first start-up of the processor or upon at least one of the first start-ups following the first start-up.

7. The method according to any of claims 1 to 6, **characterized in that** for an operation of the processor after determining the maximum clock frequency, a lower clock frequency than the maximum clock frequency is employed to guarantee a secure start and a secure execution of the program.

8. The method according to any of claims 1 to 7, **characterized in that** the clock frequency is generated by means of a phase-locked loop or a clock divider or an RC oscillating circuit having a following clock divider.

9. The method according to any of claims 1 to 8, **characterized in that** the auxiliary program upon starting and executing by the processor effectuates at least the same power consumption of the processor as when the program is started and executed by the processor, by the auxiliary program being a defined calculation algorithm in the form of additions and/ or subtractions and/ or multiplications and/ or divisions which is executed by the processor.

10. The method according to any of claims 1 to 9, **characterized in that** the auxiliary program is started by the processor only if at least one sensor, which is electroconductively connected to the processor, signals to the processor that an electromagnetic field makes enough power available for starting and executing the program.

11. A chip card which is devised to execute the method according to claims 1 to 10.

## Revendications

1. Procédé de détermination de la capacité de charge d'une source électrique par un processeur de manière à ce qu'un démarrage et/ou une exécution d'un programme puissent être effectués par le processeur sans que le démarrage et/ou l'exécution du programme ne soient interrompus quand le processeur, pendant le démarrage et/ou pendant l'exécution du programme, prélève à la source davantage de puissance électrique que la source ne met à disposition,
cependant que, comme source électrique, c'est une bobine d'antenne qui est utilisée, laquelle est reliée de manière électriquement conductrice au processeur,
cependant que le processeur et la bobine d'antenne sont agencés dans un support de données portable,
cependant que le processeur est relié de manière électriquement conductrice à des capteurs qui signalent au processeur s'il y a une intensité magnétique de champ minimale du champ magnétique entourant le support de données,
cependant que le champ magnétique est généré par un appareil de lecture,
cependant qu'une impédance de sortie de la bobine d'antenne n'est pas adaptée à une impédance d'entrée du processeur,
**caractérisé en ce que,** avant le démarrage et l'exécution du programme, le processeur démarre (8) et exécute un utilitaire, cependant que l'utilitaire engendre au moins la même absorption d'énergie du processeur au démarrage et à l'exécution que quand le processeur démarre et exécute le programme, afin de constater si la puissance mise à disposition par la source suffit pour le démarrage et l'exécution du programme, afin de, en cas de puissance au moins suffisante, à la suite de l'exécution de l'utilitaire, démarrer et exécuter (14) le programme par le processeur,
cependant que l'utilitaire augmente l'absorption de puissance du processeur, ce qui a lieu **en ce que** l'utilitaire augmente une fréquence d'horloge du processeur (12), cependant que la fréquence d'horloge est augmentée jusqu'à ce qu'une fréquence maximale d'horloge à laquelle un démarrage et une exécution de l'utilitaire par le processeur est possible soit atteinte (10) sans que le processeur ne prélève à la source davantage de puissance que la source ne met à disposition.

2. Procédé selon la revendication 1, **caractérisé en ce que** l'utilitaire commence à nouveau à une fréquence minimale d'horloge quand le démarrage ou l'exécution de l'utilitaire a été interrompu(e) du fait que le processeur a prélevé à la source davantage de puissance que la source ne met à disposition.

3. Procédé selon une des revendication de 1 à 2, **caractérisé en ce qu'**il est mis fin à l'utilitaire quand il a atteint une fréquence d'horloge aussi élevée que possible pour le processeur à laquelle un démarrage et une exécution de l'utilitaire par le processeur est possible sans que le processeur ne prélève à la source davantage de puissance que la source ne met à disposition.

4. Procédé selon la revendication 3, **caractérisé en ce que** la fréquence d'horloge aussi élevée que possible est supérieure ou égale à la fréquence maximale d'horloge.

5. Procédé selon une des revendications de 1 à 4, **caractérisé en ce que** la fréquence maximale d'horloge est mémorisée pour le fonctionnement subséquent du processeur.

6. Procédé selon une des revendications de 1 à 5, **caractérisé en ce que** l'utilitaire n'est exécuté qu'une fois lors de la première mise en service du processeur ou lors d'au moins une mise en service succédant la première mise en service.

7. Procédé selon une des revendications de 1 à 6, **caractérisé en ce que**, pour un fonctionnement du processeur après la détermination de la fréquence maximale d'horloge, une fréquence d'horloge inférieure à la fréquence maximale d'horloge est utilisée afin d'assurer un démarrage sûr et une exécution sûre du programme.

8. Procédé selon une des revendications de 1 à 7, **caractérisé en ce que** la fréquence d'horloge est générée au moyen d'une boucle à verrouillage de phase ou d'un diviseur d'horloge ou d'un circuit oscillant RC avec diviseur d'horloge subséquent.

9. Procédé selon une des revendications de 1 à 8, **caractérisé en ce que** l'utilitaire engendre, au démarrage et à l'exécution par le processeur, au moins la même absorption d'énergie du processeur que quand le programme est démarré et exécuté par le processeur, ce qui a lieu **en ce que** l'utilitaire est un algorithme défini de calcul sous forme d'additions et/ou de soustractions et/ou de multiplications et/ou de divisions qui est exécuté par le processeur.

10. Procédé selon une des revendications de 1 à 9, **caractérisé en ce que** l'utilitaire n'est démarré par le processeur que quand au moins un capteur qui est relié de manière électriquement conductrice au processeur signale au processeur qu'un champ électromagnétique met à disposition suffisamment de puissance pour le démarrage et pour l'exécution du programme.

11. Carte à puce conçue pour exécuter le procédé suivant les revendications de 1 à 10.
